(19) Europäisches Patentamt
European Patent Office
Office européen des brevets

(11) Publication number: **0 117 452**
**A1**

(12) # EUROPEAN PATENT APPLICATION

(21) Application number: **84100967.3**

(22) Date of filing: **31.01.84**

(51) Int. Cl.³: **C 09 D 11/02**

(30) Priority: **31.01.83 US 462705**

(43) Date of publication of application: **05.09.84**
**Bulletin 84/36**

(84) Designated Contracting States: **BE DE FR GB IT**

(71) Applicant: **Union Camp Corporation, 1600 Valley Road, Wayne New Jersey 07470 (US)**

(72) Inventor: **Peck, Michael C., 3713 Oakland Drive, Savannah Georgia 31404 (US)**
Inventor: **Jacobi, Dennis M., 2332 Walz Drive, Savannah Georgia 31404 (US)**

(74) Representative: **von Füner, Alexander, Dr. et al, Patentanwälte Schiff, von Füner Strehl, Schübel-Hopf, Ebbinghaus, Finck Mariahilfplatz 2 u. 3, D-8000 München 90 (DE)**

(54) **Aqueous printing ink.**

(57) Aqueous printing ink vehicl and ink compositions are disclosed, which are based on sulfated or sulfonated organic compound binders.

EP 0 117 452 A1

# AQUEOUS PRINTING INK

## BACKGROUND OF THE INVENTION

### Field of the Invention

The invention relates to printing ink and more particularly to an aqueous printing ink vehicle and ink using a sulfated fatty acid component as a pigment binder.

### Brief Description of the Prior Art

Conventional, commercially available printing inks, particularly useful for newsprinting, are generally made up of petroleum oils in which a pigment (preferably carbon black) is suspended. When applied to a paper substrate the oil separates from the pigment and is absorbed into the paper substrate. The pigment is left deposited on the paper surface, but "undried". In this "undried" state, offsetting may occur, i.e.; the ink is readily removed by rubbing the undried deposit.

There are a number of other disadvantages associated with the use of oil based printing inks, including "strike through", the phenomena caused by penetration of the oil component through the paper substrate so as to stain the reverse side. Many of these prior art problems associated with the use of oil based printing inks have been solved by the use of water-based printing inks; see for example U. S. Patent 4,310,356.

The present invention is of water-based printing ink that is useful as a newsprint ink and also for printing on any porous surface such as cellulosic bags, boxes and the like. The ink of the invention is unique in that it includes as an active ingredient, a water-dispersible, sulfated organic binder based on a renewable resource and a co-binder useful for viscosity control. The inks of the invention are advantageous in that they are relatively non-polluting, may be applied by the flexographic technique

(avoiding the energy inefficient letterpress technique), avoid "strike-through" and are rubresistant because they "dry" or bind on the substrate surface. The quality of printing achievable is high.

SUMMARY OF THE INVENTION

The invention comprises a printing ink vehicle, which comprises;

a. a sulfated or sulfonated organic binder;
b. a viscosity adjusting agent;
c. a defoamer;
d. a pH adjusting agent; and
e. water;

said vehicle having a viscosity within the range of from about 1,000 to about 8,000 centipoise (Brookfield viscosity at 25°C) and a pH within the range of from about 5 to about 12.

The invention also comprises printing inks made with the ink vehicle of the invention. The printing inks of this invention are prepared by dispersing a suitable pigment in the aforementioned vehicle by methods well known in the art, said ink having a viscosity range of from about 15 to about 80 seconds on a number 2 Zahn cup.

The printing inks of this invention are particularly useful in printing newspapers, kraft paper, liner board and similar absorbent substrates.

DETAILED DESCRIPTION OF THE PREFERRED EMBODIMENTS OF THE INVENTION

The invention revolves around the discovery that sulfated or sulfonated organic compounds are excellent binder components for aqueous printing ink compositions.

A wide variety of sulfated or sulfonated organic compounds may be employed as an active ingredient (binder)

0117452

in the vehicles and the inks of the invention. Representative of such binders are:

| | |
|---|---|
| Sulfated Castor Oils | Alkylaryl Sulfonates |
| Alcohol Ether Sulfates | Napthalene Sulfonates |
| Fatty Ester Sulfates | Sulfo Succinates |
| Ethoxylated Alkyl Phenol Sulfates | Ligno Sulfonates |
| Alkyl Sulfates | Olefin Sulfonates |
| Sulfated Fatty Amides | Fatty Amide Sulfonates |
| Aromatic Sulfonates | Ethoxylated Alkyl Phenol Sulfonates |

and the like.

Preferred as the sulfated or sulfonated organic compound employed in the invention are the sulfated or sulfonated fatty acids. The term "fatty acids" as used herein means the large group of aliphatic, monocarboxylic acids including the saturated acids of the acetic acid series $C_nH_{2n+1}COOH$, both normal and branched-chain and the corresponding unsaturated acids. A complete definition and examples of fatty acids may be found in the Kirk-Othmer Encyclopedia of Chemistry, Vol. 8, page 811.

The sulfated or sulfonated fatty acids employed in the present invention may be prepared by the following schemes:

<u>Sulfation</u>: (Fatty Acid + Sulfuric Acid)

$$R\text{-}CH{=}CH(CH_2)_n\text{-}COOH + H_2SO_4 \longrightarrow R\text{-}CH_2\text{-}\underset{\displaystyle OSO_2H}{\underset{|}{CH}}(CH_2)_n\text{-}COOH$$

<u>Sulfonation</u>: (Fatty Acid + Sulfur Trioxide)

$$R\text{-}CH_2\text{-}COOH + SO_3 \longrightarrow \underset{\displaystyle SO_3H}{\underset{\diagdown}{RCH}}\text{-}COOH$$

Wherein R represents the aliphatic residue of the fatty acid, after removal of the $-CH=CH-(CH_2)_nCOOH$ or $-CH_2-COOH$ moiety.

Particularly preferred as the binder component of the printing ink composition of the present invention are the sulfated tall oil fatty acids. Crude tall oil generally contains from about 54-36 percent fatty acids in admixture with 38 to 58 percent rosin acids and 5 to 15 percent unsaponifiables. The sulfated crude oil mixtures may be used in the vehicle and the inks of the invention. Advantageously however, refined tall oils are used, containing a minimum of at least 90 percent fatty acids to prepare the sulfate used in the compositions of the invention.

Particularly preferred as a refined tall oil fatty acid to prepare the sulfate used in the compositions of the invention is Unitol DSR (Union Camp Corporation) which has the following typical composition.

| | Weight Percent |
|---|---|
| palmitic and stearic acids | 4.6 |
| oleic acid | 40.3 |
| linoleic acid | 34.5 |
| miscellaneous acids | 11.5 |
| rosin acids | 3.0 - 8.0 |
| unsaponifiables | 3.0 |

The following preparation describes a process for making a preferred sulfated tall oil fatty acid used in the compositions of this invention.

PREPARATION

Twelve hundred sixty pounds of Unitol DSR (Union Camp Corporation) was charged to a 500 gallon lead lined reactor equipped with three sets of angled paddles, fume removal system, and lead heating/cooling coils. Agitation was begun

and the Unitol DSR precooled to 10°C. Three hundred seventy-eight pounds of 98% sulfuric acid was added over a two-hour period under full reactor cooling (glycol) and the temperature rose to 23°C. The reaction mix was cooled to 10°C for neutralization. Twelve hundred sixty pounds of 17% sodium hydroxide was added over a one-half hour period. This gave a pH = 5.1 with the reaction temperature climbing to 42°C. Fifty pounds of sodium sulfate and 100 pounds of isopropyl alcohol were added to facilitate oil-water phase separation. The mixture was left to split for eight hours. The oil phase was collected as product with the following:

| | | |
|---|---|---|
| pH | = | 5.1 |
| % solids | = | 66.0 |
| % hydrolyzable sulfate | = | 5.3 |

Examples of other commercially available sulfated tall oil fatty acids are Actrasol SP (Southland Corp.) and Chemos L-22 (Chemos Chemical Corp.).

The preferred sulfated fatty acids employed as binders in the vehicle and ink compositions of the invention generally contain from three to ten percent hydrolyzable sulfate and preferably five to seven percent.

The sulfated fatty acid binders are advantageously used in a proportion of from 20 to 80 percent and preferably 50 to 70 percent of the total ink vehicle composition.

In addition to the sulfated or sulfonated fatty acid binder component, the compositions of the invention also contain a viscosity adjusting agent, which is also functionally a co-binder. While protein extracted from soybeans is preferred as a co-binder and viscosity adjusting modifier, numerous other natural and synthetic water dispersible polymeric substances can be used. Representative of these are natural compounds such as cellulose derivatives - (HEC, CMC), starches, non-soya proteins, gums, shellac, alginates, pections; synthetic compounds such as polyvinyl alcohol, polyacrylamide, polyvinyl pyrrolidone, poly (alkylene oxides), alcohol

soluble rosin-maleics, styrene-maleic resin, polyacrylic acid, acrylic copolymers and the like.

The viscosity adjusting agent is used in a proportion adequate to obtain the desired viscosity of the composition of the invention.

Advantageously, a defoamer is an ingredient of the compositions of the invention. Any conventional defoamer may be employed, in a defoaming proportion. Defoamers are well known and many are commercially available such as WITCO 3056A (WITCO Chemical Co.).

The compositions of the invention advantageously have a pH of from eight to nine. The desired pH may be obtained, when necessary, by adjustment with an acid or a base. In general, the compositions of the invention would tend to be acid without the addition of a strong base such as ammonium hydroxide to adjust to the desired pH.

The vehicle compositions of the invention are prepared by simple admixture of the ingredients therefore, employing conventional apparatus and techniques for mixing aqueous materials.

The following examples describe the manner and the process of making and using the invention and set forth the best mode contemplated by the inventors but are not to be construed as limiting. All parts are by weight unless otherwise stated.

EXAMPLE 1

A suitable vessel was charged with 61.6 parts by weight of a sulfated tall oil fatty acid (Unitol H-66; Union Camp Corporation, Chemical Products Division, Jacksonville, Florida; a sodium neutralized sulfated tall oil with a low rosin acid content) and 26.9 parts of water. To the charge there was added with stirring 5.0 parts of an amine dispersible soya protein (polymer 8000; Ralston-Purina Corp.). The mixture is heated to a temperature of circa 55°C and with continued stirring there is added 6.0 parts of ammonium hydroxide. The temperature of the mixture is

raised to circa 63°C and stirring continued for about 30 minutes, after which there is added 0.5 parts of a defoamer (Witco 3056A). After stirring for an additional 10 minutes, the mixture is allowed to cool to room temperature, filtered through cheesecloth and stored for use in a printing ink.

The vehicle of Example 1 is used in admixture with a pigment to form an ink of the invention. Generally 10 to 50 percent by weight of the total ink composition comprises pigment. Any conventional pigment can be used. Representative of such pigments are carbon black, diarylide yellow, titanium dioxide, phthalocyanine blue (cyan) and calcium lithol red.

The binder vehicle and pigment are suspended together in water as a carrier. Generally, a viscosity adjuster as previously described is added in sufficient quantity to provide a printable viscosity in the printing ink composition of the invention, within a range of from about 10 to about 80 seconds on a number 2 Zahn cup and more preferably 20 to about 40 seconds.

When formulating the ink composition of this invention the formulator may use small amounts of other modifiers well known in the art. Examples of these are: microcrystalline and paraffin waxes, pigment extenders such as clays and pigment dispersing aids such as sodium hexametaphosphate or co-solvents like glycols and other high boiling solvents to regulate ink film drying rates.

In general, including all additives the ink composition of the invention will have solids contents ranging from 15 to about 80 percent by weight of the total composition; preferably 30 to 60 percent to insure good color density and printability.

The following example demonstrates the use of the preferred ink vehicle of Example 1 in preparation of several different color inks. All parts are by weight unless otherwise stated.

EXAMPLE 2

The ingredients given in the following table were used to prepare three ink compositions A-C.

| | Yellow A | Red B | Black C |
|---|---|---|---|
| Vehicle of Example 1 | 28.00 | 34.00 | 43.50 |
| Polyglycol P-1200 | 1.25 | 1.25 | 1.25 |
| 2 Ethyl Hexanol | 1.00 | 1.00 | 1.00 |
| Dow Corning H-10 Anti-Foam | 0.25 | 0.25 | 0.25 |
| Shamrock Wax 5-379-3N | 0.50 | 0.50 | 0.50 |
| Sun Chem. 274-1744 Yellow | 7.50 | - | - |
| Sun Chem. 274-9700 Yellow | 3.00 | - | - |
| Tipure (Titanium Dioxide) Natl. Lead | 20.25 | - | - |
| Hansa GG Red (American Hoescht) | - | 8.25 | - |
| Lithol Red (20-4210) American Cyanamid | - | 4.75 | - |
| 3040 White | - | 16.75 | - |
| Elftex 8 (Carbon Black) Cabot Corp. | - | - | 18.00 |
| Clay | 0.50 | - | - |
| Water | 37.75 | 33.25 | 35.50 |
| Viscosity, secs. #2 Zahn Cup | 21 | 35 | 40 |

The above inks were prepared in the following manner:

(A) Yellow Ink:

Charge all ingredients except pigment and 10.75 parts of water to a suitable mixing tub equipped with a Hockmeyer (high speed dispersion) mixer. Charge pigment and mix about 15 minutes at medium to high speed. This mixture is then

passed through a Morehouse stone mill twice to complete dispersion and the remaining 10.75 parts of water added and mixed with a Hockmeyer mixer.

(B) Red Ink:

Charge all ingredients except pigment, 19.0 parts of vehicle from Example 1, and 5.50 parts of water, and 16.75 parts of 3040 white to a suitable mixing tub equipped with a Hockmeyer mixer. Charge red pigments and mix at medium to high speed for 15 minutes. The mixture is then passed through a Morehouse stone mill twice to complete dispersion and the remaining formula components added and mixed with the Hockmeyer mixer.

(C) Black Ink:

Add all ingredients except 22.50 parts of vehicle from Example 1, 3.50 parts of water, and carbon black to suitable mixing tub equipped with a Hockmeyer (high speed dispersion) mixer. Add carbon black pigment and mix at medium to high speed for 15 minutes. Mixture is then passed through a stainless steel media shot mill, the remaining vehicle and water added and mixed with Hockmeyer mixer.

In preparing the inks of this invention, any conventional pigment dispersing equipment such as three roll mills and ball mills may be used.

In the compositions of the invention, water is present as an essential ingredient, in sufficient proportion to act as a carrier for the vehicle and the inks of the invention, generally comprising from about 20 to about 80 percent of the ink vehicle.

WHAT IS CLAIMED:

1. A printing ink vehicle, which comprises;
   (a) a sulfated or sulfonated organic binder;
   (b) a viscosity adjusting agent;
   (c) a defoamer;
   (d) pH adjusting agent; and
   (e) water;

said vehicle having a viscosity range of from about 1,000 to about 8,000 centipoise (Brookfield viscosity at 25°C) and a pH within the range of 5 to 12.

2. The composition of claim 1 where (a) is a sulfated tall oil fatty acid containing 3 to 10 percent hydrolyzable sulfate.

3. The composition of claim 1 where (b) is a soya protein.

4. The composition of claim 1 where (d) is ammonium hydroxide.

5. A printing ink, which comprises;
   (a) the vehicle of claim 1; and
   (b) pigment;

said ink having a viscosity within the range of from about 15 to about 80 seconds on a number 2 Zahn cup.

European Patent Office

# EUROPEAN SEARCH REPORT

0117452
Application number

EP 84 10 0967

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
| --- | --- | --- | --- |
| | | | C 09 D 11/02 |
| X | US-A-3 361 582 (B.J. LEWIS) * Claims 1-9 * --- | 1,4 | |
| A | US-A-2 754 218 (W.A. MAGIE) * Claim 1 * --- | 1 | |
| A | US-A-3 421 910 (J.L. GILSON) * Abstract * ----- | 1 | |
| | | | TECHNICAL FIELDS SEARCHED (Int. Cl. 3) |
| | | | C 09 D 11/02 |

The present search report has been drawn up for all claims

| Place of search | Date of completion of the search | Examiner |
| --- | --- | --- |
| THE HAGUE | 22-05-1984 | DE ROECK R.G. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503. 03.82